# EUROPÄISCHE PATENTSCHRIFT

(11) **EP 0 735 737 B1**
(45) Veröffentlichungstag und Bekanntmachung des Hinweises auf die Patenterteilung: **07.05.2008**
(21) Anmeldenummer: 96103973.2
(22) Anmeldetag: 13.03.1996
(51) Int. Cl.: H04M 11/02

(54) **Telekommunikationssystem mit einem als Türsprecheinrichtung ausgebildeten Endgerät**
Communication system with a terminal designed as a door telephone
Système de communication avec un terminal sous forme d'interphone

(30) Priorität: 31.03.1995 DE 19512167
(43) Veröffentlichungstag der Anmeldung: 02.10.1996
(73) Patentinhaber: Siemens Enterprise Communications GmbH & Co. KG, 81379 München (DE)
(72) Erfinder: Böttger, Detlev, Dipl.-Ing., 58239 Schwerte (DE); Wilske, Dietmar, 16515 Oranienburg (DE); Brune, Georg, DIpl.-Ing., 58675 Hemer (DE); Dziennus, Norbert, Dipl.-Ing., 44227 Dortmund (DE)
(74) Vertreter: Maier, Daniel Oliver

(56) Entgegenhaltungen:
- EP-A- 0 557 779
- US-A- 5 384 838

## Beschreibung

Die Erfindung betrifft ein Telekommunikationssystem mit einer speicherprogrammierten Systemsteuerung, die aus einem Systemspeicher zur Speicherung der Programmodule und Daten und aus wenigstens einem Systemprozessor besteht, mit mindestens einer, zusätzlich zu den vorgesehenen Endgeräten als Sonderendgerät daran über eine Anschlußleitung angeschlossenen Türsprecheinrichtung, die eine mit einem Mikrofon- und Hörer bzw. Lautsprecherkreis gekoppelte Verstärkerschaltung aufweist, die ihrerseits von einer vom System unabhängigen externen Speisespannungsquelle gespeist wird, wobei vermittels eines der angeschlossenen Fernsprechendgeräte eine Sprechverbindung zur Türsprecheinrichtung schaltbar ist.

Solche programmgesteuerten Kommunikationssysteme dienen zur Verbindung von Endgeräten untereinander und zur Verbindung dieser Endgeräte mit an andere Kommunikationssysteme angeschlossenen Endgeräten. An ein Nebenstellenkommunikationssystem sind je nach seinem Komplexitätsgrad Endgeräte mit vielfältigen Leistungsmerkmalen anschließbar. Das zugrundeliegende Kommunikationssystem besteht im Prinzip aus einer Vielzahl von vermittlungstechnischen Funktionseinheiten und einem programmierbaren digitalen Rechnersystem, das diese Funktionseinheiten steuert und alle vermittlungstechnischen Abläufe überwacht. Dazu ist es erforderlich, daß das Rechnersystem mit Informationen über den Betriebszustand der Funktionseinheiten und über Zustandsänderungen, insbesondere über Eingaben der angeschlossenen Endgeräten informiert wird. Es kann deshalb bei Bedarf umgehend entsprechende Steueranweisungen und Meldungen erstellen und ausgeben. Für die Steuerung der erforderlichen Abläufe greift der Systemprozesor auf Informationen zurück, die in entsprechenden Speichereinheiten abgespeichert sind.

Es ist bekannt, insbesondere bei sog. kleinen Telekommunikationssystemen als Endgerät eine Türsprecheinrichtung vorzusehen. Diese ist üblicherweise als Türfreisprechstelle ausgebildet. Der Anschluß dieser Türsprechstelle kann über eine analoge Teilnehmerschnittstelle erfolgen. Es gelten jedoch für derartige Teilnehmerstellen gewisse Funktionseinschränkungen gegenüber den anderen gleichfalls an das System angeschlossenen Endgeräten. Üblicherweise ist einer solchen Fürsprecheinrichtung ein Element zugeordnet, mit dem eine Türöffnerfunktion ermöglicht wird. Um systemseitig anzuordnende Steuermittel und auch eine zusätzliche Steuerader für die Einschaltung der zur Türsprecheinrichtung gehörigen Verstärkerschaltung zu vermeiden, ist für diese ein Dauerbetrieb vorgesehen. Hierzu wird die Türsprecheinrichtung ständig von einer externen Stromquelle gespeist. Ein solcher Dauerbetrieb ist hinsichtlich der Energiebilanz ungünstig und er führt insbesondere dann wenn man eine besonders aufwendige und damit kostenintensive Lösung vermeiden will zu Funktionsstörungen und auch zu einem Ausfall der Verstärkerschaltung.

Es ist die Aufgabe der Erfindung diesbezüglich die Verhältnisse zu verbessern. Dies wird dadurch erreicht, daß eine mit dieser Anschlußleitung gekoppelte und auf überlagerte Wechselspannungsanteile und/oder Gleichspannungsänderungen ansprechende Indikatoreinheit vorgesehen ist, daß durch ihr wirksames Ansprechen mittelbar oder unmittelbar die Anschaltung der Verstärkerschaltung an die Speisespannungsquelle für eine bestimmte Bedarfszeit veranlaßt wird.

Das wesentliche der Erfindung besteht darin, daß aufgrund von speziellen Ereignissen auf der Anschlußleitung die Türsprecheinrichtung, insbesondere die Verstärkerschaltung automatisch wirksam angeschaltet wird. Der Schaltbefehl hierzu wird von einer, sinnvollerweise der Türsprecheinrichtung örtlich zugeordneten Indikatoreinheit geliefert. Ein solches Ereignis kann das Auftreten von Sprachsignalen oder anderen Wechselspannungsanteile bzw. von durch eine Person an der Türsprechstelle bewirkten Änderungen der Leitungsgleichspannung betreffen. Die erfindungsgemäße Lösung erfordert also keinen zusätzlichen Kriterienaustausch zwischen dem System und der Türsprecheinrichtung, sie kann also unabhängig von der speziellen Art des Kommunikationssystems eingesetzt werden. Das Schalterelement für die bedarfsweise anzuschaltende Spannungsversorgung an die Türsprecheinrichtung ist somit nicht optional innerhalb des Systems vorzusehen. Dies bedeutet eine entsprechende Einsparung, was wiederum insbesondere bei kleinen Kommunikationssystemen ins Gewicht fällt. Nach der wirksamen Anschaltung der beispielsweise von einem externen Steckernetzteil gelieferten Versorgungsspannung kann die Bedarfszeit entweder als fest vorgegebene Zeitspanne festgelegt sein oder es erfolgt eine sprachgesteuerte Festlegung der jeweils aktuell erforderlichen Zeitspanne. Es ist dabei sichergestellt, daß Sprachpausen wirksam überbrückt werden. Mit dem Ausbleiben der Wechselspannungsanteile bzw. nach Ablauf der fest vorgegebenen Bedarfszeit wird die Spannungsversorgung für die Türsprecheinrichtung wieder abgeschaltet. Das Ansprechen der Indikatorschaltung kann erfindungsgemäß durch überlagerte Wechselspannungsanteile erfolgen, wobei diese Wechselspannungsanteile auch als "Knackgeräuschsanteile" bei der Betätigung eines mechanisch zu betätigenden Kontaktelementes entstehen. Die Indikatorschaltung ist dann diesbezüglich breitbandig auszulegen. Zur Auslösung der Indikation kann auch der bei Betätigung des Kontaktelementes, das beispielsweise eine Taste darstellt verursachte Spannungsabfall an der Anschlußleitung dienen, wobei dann zur weiteren Aufrechterhaltung der Spannungsversorgung für die Türsprecheinrichtung die Bewertung der überlagerten Wechselspannungsanteile erfolgen kann. Grundsätzlich können sämtliche bei einer Türsprecheinrichtung notwendigen Funktionen über eine zweiadrige Anschlußleitung ermöglicht werden.

Weitere vorteilhafte Ausgestaltungen der Erfindung sind den restlichen Unteransprüchen zu entnehmen.

Im folgenden wird das erfindungsgemäße Telekommunikationssystem insbesondere im Hinblick auf die daran angeschlossene Türsprecheinrichtung anhand eines vereinfachten Blockschaltbildes näher erläutert.

Das Telekommunikationssystem KS kann beispielsweise ein sog. kleines Nebenstellenkommunikationssystem darstellen, an das eine Mehrzahl von Fernsprechendgeräten anschließbar ist. Stellvertretend für diese Endgeräte ist in der FIG lediglich das Endgerät EG und die ein Sonderendgerät darstellende Türfreisprecheinrichtung TSE als unterschiedliche Ausführungsform angedeutet. Es sind selbstverständlich auch grundsätzlich andere Geräte, wie Telefaxgeräte und über Modems auch Datensicht- und Datenverarbeitungsgeräte anschließbar. Das Kommunikationssystem kann mit dem öffentlichen Telekommunikationsnetz über mindestens eine Amtsleitung AL oder auch mit anderen Telekommunikationssystemen verbunden sein. Es besteht im Prinzip aus einzelnen, untereinander verbundenen modularen Einheiten. Als Schnittstelleneinrichtungen zu den Endgeräten sind in Abhängigkeit von der Art der angeschlossenen Kommunikationsendgeräte, die sowohl digitale als auch analoge Endgeräte darstellen können, unterschiedliche Anschaltungsbaugruppen vorgesehen. Diese sind durch die Einheiten LA bzw. AS angedeutet. Durch sie werden u.a. unterschiedliche Signalisierungsinformationen von den Endgeräten oder den Netzen auf ein innerhalb des Kommunikationssystems KS einheitlich verwendetes Format umgewandelt. Eine weitere wesentliche Einheit bildet die Koppeleinrichtung KN, die die Sprechverbindungen zwischen den Endgeräten untereinander oder zwischen den Endgeräten und den erreichbaren Telekommunikationsnetzen durchschaltet. Weiterhin ist eine zentrale Signaleinrichtung SE vorhanden, die neben dem für die Erzeugung der Hörtöne vorgesehenen Modul H auch den für die Erzeugung der Rufspannung zuständigen Ruftongenerator RG enthält. Die von ihm gelieferten Rufsignale werden über eine gemeinsame Rufleitung den Anschaltebaugruppen LA zugeführt und an die jeweilige Anschlußleitung wirksam angeschaltet. Dies erfolgt durch Schaltmittel, die jeweils durch eine vorgegebene Rufprozedur gesteuert werden.

Sämtliche modularen Einheiten sind mit einer zentralen Steuereinheit verbunden. Diese besteht aus der Systemsteuerung CPU und der Speichereinrichtung SPE. Diese Speichereinrichtung gliedert sich grundsätzlich in einen Kundendatenspeicher KD, einem Programmspeicher P und einem Arbeitsspeicher A. Im Programmspeicher P ist u.a. das Anlagenbetriebsprogramm abgespeichert. Im Speicherteil KD sind die Kundendaten, z.B. die den einzelnen Kommunikationsendgeräten EG zugeteilten Berechtigungen abgelegt. Außerdem sind darin weitere Besonderheiten der angeschlossenen Endgeräte abgespeichert. Der Arbeitsspeicher A dient u.a. der Aufnahme von temporären Daten zur Programmablauf-Steuerung. Durch die Systemsteuerung CPU werden die Funktionen der einzelnen Einheiten überwacht, diese Einheiten werden zur Ausführung ihrer spezifischen Funktionsabläufe angeregt und es werden von diesen Einheiten Daten entgegengenommen.

Die im Speicherteil KD abgelegten Kundendaten können beispielsweise durch ein als betriebstechnische Einrichtung vorbestimmtes Teilnehmerendgerät konfiguriert werden. Ein angeschlossenes Fernsprechendgerät EG, das zur endgerätespezifischen Signalisierungsverarbeitung über die Schnittstelle LA mit dem System verbunden ist, weist z.B. ein Display DL und eine Tastatur Ta auf. Die Taste Tw soll die übliche Wähltastatur symbolisieren und durch die Taste Tf soll das Vorhandensein von weiteren Funktionstasten angedeutet werden. Der Tastenblock Ta ist mit einer z.B. durch einen Prozessor realisierten Steuereinheit Pe gekoppelt. Mit dieser Steuereinheit ist ferner eine Schnittstelleneinheit S verbunden, durch die diejenigen Signalisierungsinformationen an das Vermittlungssystem KS weitergegeben werden, die jeweils einer bestimmten Taste bei ihrer Betätigung zugeordnet sind.

Weiterhin ist diese Schnittstelleneinrichtung S befähigt, diejenigen Informationen zu registrieren, die dem Fernsprechendgerät EG durch das Vermittlungssystem zur weiteren Verarbeitung vermittelt werden. Zumindest ein Teil der abgehenden und der ankommenden Signalisierungsinformationen werden auf dem Display DL angezeigt. Die Einheit Se ist als Speicher ausgebildet und dient beispielsweise der Aufnahme des Betriebsprogrammes für die Steuereinheit Pe und für zwischenzuspeichernde Daten.

Als Teilnehmer kann über eine zweiadrige Anschlußleitung ASL eine als Sonderendgerät anzusehende Türsprecheinrichtung TSE angeschlossen werden. Diese Einrichtung kann als Türfreisprecheinrichtung ausgebildet sein und sie enthält eine Verstärkerschaltung VS, die auch die durch die Einheit GS angedeutete Gabelschaltung beinhaltet. Die Verstärkerschaltung ist in bekannter Weise mit einem ein Mikrofon M enthaltenen Mikrofonkreis und mit einem einen Lautsprecher LS enthaltenen Lautsprecherkreis verbunden.

Wird die der Türsprecheinrichtung TSE räumlich unmittelbar zugeordnete Taste TA von einer Person, die zunächst über die Türsprechstelle kommunizieren will betätigt, so fließt in der Anschlußleitung ASL ein Schleifenstrom. Dessen Wert soll im wesentlichen durch den Abschlußwiderstand R2 bestimmt sein. Dieser Widerstand entspricht den beim Anschluß eines normalen Fernsprechendgerätes auftretenden Leitungsabschlußwiderstand. Die Speisung für diese Anschlußleitung erfolgt innerhalb des Kommunikationssystems KS und wird durch die dargestellte Batterie B symbolisiert. Am Widerstand R1 entsteht ein Spannungsabfall, der in der Anschlußeinheit LAs die Indikationsschaltung SK ansprechen läßt. Durch diese Indikationsschaltung wird im System der jeweilige Leitungszustand signalisiert. Die Ausgangsinformation der Indikationsschaltung SK wird innerhalb eines bestimmten Abfragezyklusses durch die Systemsteuerung CPU abgefragt. Damit ist in gleicher Weise wie für die übrigen Anschlußleitungen eine Zustandsänderung feststellbar, wodurch dann gleichzeitig die Identifizierung des betreffenden Anschlusses eingeleitet wird. Damit ist dann das betreffende Endgerät bekannt, so daß durch die Systemsteuerung auf die diesbezüglich im Kundendatenspeicher KD der Speichereinrichtung SPE für dieses jeweilige Endgerät enthaltenen Informationen zurückgegriffen werden kann.

Im Falle der Türsprecheinrichtung TSE muß durch die Programmsteuerung CPU die mit der Betätigung der Taste TA bewirkte kurzzeitige Aktivierung des Schleifenstromes zu anderen Abläufen führen als dies bei einem normalen Fernsprechendgerät der Fall wäre. Das Loslassen der Taste TA führt nicht zur Auslösung der Leitung sondern es ist sichergestellt, daß durch die Systemsteuerung eine optische und/oder akustische Rufsignalisierung zu einem im Kundendatenspeicher KD definierten Endgerät veranlaßt wird.

Innerhalb der Türsprecheinrichtung TSE bzw. innerhalb einer ihr räumlich unmittelbar zugeordneten Einheit werden bei der Betätigung der Taste TA noch weitere Funktionsabläufe initiiert. Diese erfolgen unabhängig von der Art des Kommunikationssystems an das die Türsprecheinrichtung TSE angeschlossen ist. An die Anschlußleitung ASL ist innerhalb dieser Türsprecheinrichtung TSE eine Indikatoreinheit IE angeschaltet. Diese Indikatoreinheit kann derart ausgestaltet sein, daß sie auf Wechselspannungsanteile, die an dieser Leitung auftreten anspricht. Derartige Wechselspannungsanteile können Sprachwechselspannungen darstellen oder es können auch Wechselspannungsanteile sein, die als sog. "Knackgeräuscheinflüsse" beispielsweise bei der Betätigung der Taste TA entstehen. Damit dann die Indikatoreinheit IE auf beide Arten von Wechselspannungsanteilen anspricht, muß sie ein entsprechend breites Spektrum dieser Anteile bewerten können. Diese Indikatoreinheit kann aber entweder ausschließlich oder zusätzlich noch derart ausgelegt sein, daß sie auf die bei der Betätigung der Taste TA bewirkte Änderung der Leitungsgleichspannung an der Anschlußleitung ASL anspricht. Mit diesem Ansprechen wird ein Schaltelement, im Ausführungsbeispiel in Form des Relais R aktiviert. Es muß nun dafür gesorgt werden, daß für eine bestimmte Bedarfszeit dieses Relais angesprochen bleibt. Insbesondere dann, wenn die Indikation ausschließlich durch die Bewertung der Gleichspannungsänderung erfolgt, wird diese Bedarfszeit durch eine gleichzeitig mit dem Relais aktivierte Zeitstufe ZS vorgegeben. Diese Zeitstufe kann beispielsweise auf digitaler Basis einen bestimmten voreinstellbaren Zeitwert vorgeben. Während dieser, dadurch definierten Zeitspanne bleibt dann das Relais angesprochen. Diese Zeitspanne kann beispielsweise einige Minuten umfassen.

Die Indikatoreinheit IE kann auch derart ausgebildet sein, daß sie zwar durch die mit der Tastenbetätigung bewirkten Spannungsänderung an der Anschlußleitung anspricht aber ihre Ansprechzeitdauer sprachgesteuert wird. Sie enthält dann einen entsprechenden Spracherkennungsbaustein, wobei gleichzeitig sichergestellt ist, daß Sprachpausen überbrückt werden. Hierfür ist dann eine bestimmte maximale Überbrückungszeit vorgesehen. Das Relais R ist also bedarfsweise aktiviert. Durch die Arbeitslage seines Kontaktes r wird für die Verstärkerschaltung VS Versorgungsspannung angelegt. Diese wird durch die Speisespannungsquelle SQ geliefert. Diese externe Versorgungsspannung kann beispielsweise durch ein Steckernetzteil zur Verfügung gestellt werden. Anstelle eines Relaiskontaktes für die Anschaltung der Speisespannungsquelle kann auch ein elektronischer Schalter verwendet werden. Ein Relaiskontakt stellt einen spannungsfreien Kontakt dar und kann also ohne Einschränkung Potential an die Verstärkerschaltung VS anlegen. Ein Leistungsverbrauch durch die Verstärkerschaltung VS bzw. durch die Türsprechstelleneinrichtung erfolgt also demnach immer nur dann, wenn diese Verstärkerschaltung tatsächlich benötigt wird. Durch diesen temporären Einsatz wird gleichzeitig eine sehr hohe Lebensdauer für diese Verstärkerschaltung erreicht. Da sie also nicht auf eine Dauerbelastung abgestimmt werden muß, ist eine preiswerte Ausführung möglich. Es werden für die Aktivierung der Verstärkerschaltung nur die im Zusammenhang mit Türsprechstellen sowieso vorhandenen Kriterien benutzt. Neben der Sicherstellung der Spannungsversorgung für diese Türsprecheinrichtung wird, wie bereits erwähnt, auch eine Rufsignalisierung für ein bestimmtes Endgerät vorgenommen. Beim Melden der gerufenen Teilnehmerstelle wird eine Sprechverbindung zur Türsprechstelle hergestellt. Dies kann durch die Betätigung einer Funktionstaste an dem betreffenden Endgerät oder auch durch die Eingabe einer charakteristischen Ziffernkombination und/oder eines bestimmten Steuerzeichencodes durch den Teilnehmer erfolgen. Bei einem sprachgesteuerten Ansprechen der Indikatoreinheit IE ist mit dem Auftreten der Sprachsignale, die auch von dem sich meldenden Teilnehmer bewirkt werden, die wirksame Anschaltung des Relais R und damit die Spannungsversorgung über den Kontakt r sichergestellt.

Das Anlassen der Verstärkerschaltung VS, die Signalisierung, daß eine Person an der Türsprechstelle anwesend ist, als auch die Sprechverbindung selbst erfolgt unter ausschließlicher Verwendung der zweiadrigen Anschlußleitung. Über diese Leitung kann auch die üblicherweise im Zusammenhang mit einer solchen Türfreisprechstelle vorgesehene Betätigung eines Türöffnermagneten vorgenommen werden. Die hierzu notwendige Signalisierung kann beispielsweise durch die Betätigung einer bestimmten, an einem Endgerät vorhandenen Funktionstaste ebenfalls über diese Anschlußleitung erfolgen. Aufgrund dieser Signalisierung kann dann ein nicht weiter dargestellter Ansprechstromkreis für einen Türöffnermagneten TM geschlossen werden. Es ist also möglich, sämtliche im Zusammenhang mit einer Türfreisprecheinrichtung vorgesehenen Steuerinformationen bzw. Informationsübertragungen ausschließlich über die zweiadrige Anschlußleitung ASL vorzunehmen.

Die der Türsprechstelle funktionell zugehörigen Elemente können zu Funktionsteileinheiten wie Klingel-Tasteneinheit KE, Anlaßeinheit AE, Verstärkereinheit VE und Türöffnereinheit zusammengefaßt sein. Für diese Teileinheiten sind dann handelsfähige Einheiten einsetzbar. Zumindest die Anlaßeinheit, Verstärkereinheit und Türöffnereinheit können auch eine eigenständige Einheit bilden.

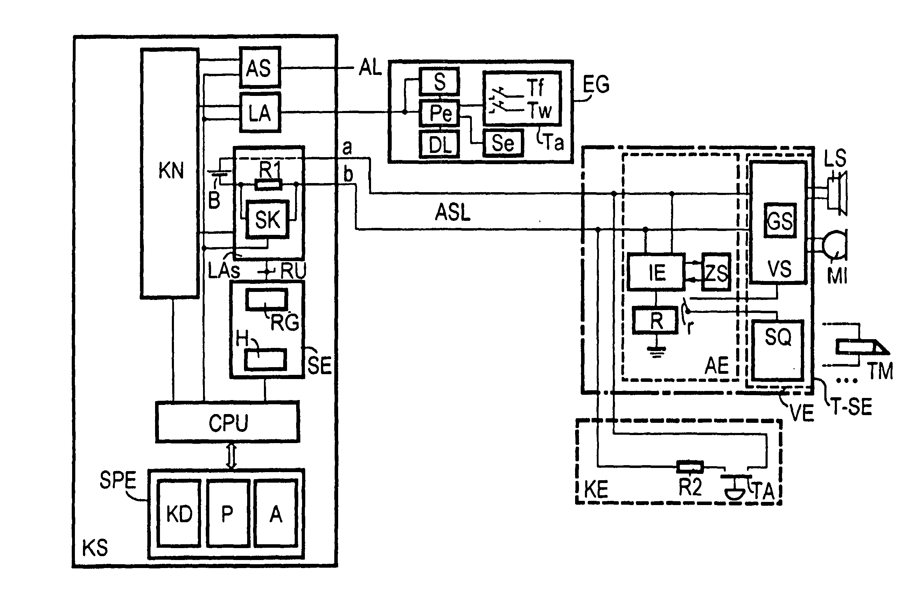

## Patentansprüche

1. Telekommunikationssystem mit Fernsprechendgeräten und einer Systemsteuerung, die aus einem Systemspeicher zur Speicherung der Programmodule und Daten und aus wenigstens einem Systemprozessor besteht mit mindestens einer, zusätzlich zu den Fernsprechendgeräten als Sonderendgerät daran über eine Anschlußleitung angeschlossenen Türsprecheinrichtung (TSE), die eine mit einem Mikrofon- und Hörer bzw. Lautsprecherkreis gekoppelte Verstärkerschaltung aufweist, die ihrerseits von einer vom System unabhängigen externen Speisespannungsquelle (SQ) gespeist wird, wobei vermittels eines der angeschlossenen Fernsprechendgeräte (EG) eine Sprechverbindung zur Türsprecheinrichtung schaltbar ist,
**dadurch gekennzeichnet,**
**daß** eine mit dieser Anschlußleitung (ASL) gekoppelte und auf überlagerte Wechselspannungsanteile und/oder Gleichspannungsänderungen ansprechende Indikatoreinheit (IE) vorgesehen ist, daß durch ihr wirksames Ansprechen mittelbar oder unmittelbar die Anschaltung der Verstärkerschaltung an die Speisespannungsquelle (SQ) für eine bestimmte Bedarfszeit veranlaßt wird.

2. Telekommunikationssystem nach Anspruch 1,
**dadurch gekennzeichnet,**
**daß** die Indikatoreinheit (IE) richtungsunabhängig auf überlagerte Wechselspannungsanteile anspricht.

3. Telekommunikationssystem nach Anspruch 1,
**dadurch gekennzeichnet,**
**daß** als Bedarfszeit eine fest vorgegebene Zeitspanne festgelegt ist.

4. Telekommunikationssystem nach Anspruch 1,
**dadurch gekennzeichnet,**
**daß** die Bedarfszeit die Zeitspanne der auftretenden Wechselspannungsanteile einschließlich einer zusätzlichen zur Überbrückung von Pausenzeichen dienenden Zeitspanne umfaßt.

5. Telekommunikationssystem nach einem der Ansprüche 3 oder 4,
**dadurch gekennzeichnet,**
**daß** das Ansprechen der Indikatorschaltung (IE) durch die Betätigung eines an der Türsprechstelle angeordneten und manuell betätigbaren Kontaktelementes (TA) bewirkt wird, wodurch die gleichstrommäßige Überbrückung der Adern der Anschlußleitung für eine bestimmte Zeit vorgenommen wird.

6. Telekommunikationssystem nach Anspruch 5,
**dadurch gekennzeichnet,**
**daß** die Betätigung des manuell betätigbaren Kontaktelementes (TA) gleichzeitig dazu dient, über eine entsprechende Indikation eine Rufanforderung an zumindest eine vorab festgelegte Endeinrichtung (EG) durch die Systemsteuerung (CPU) zu bewirken.

7. Telekommunikationssystem nach einem der Ansprüche 3 bis 5,
**dadurch gekennzeichnet,**
**daß** ausschließlich während der jeweiligen Bedarfszeit mit dem Ansprechen der Indikatoreinheit (IE) ein Schalterelement (r) wirksam geschaltet ist, durch das zur Spannungsversorgung der Verstärkerschaltung und ggf. von weiteren Elementen der Türsprecheinrichtung die externe Speisespannungsquelle (SQ) wirksam angeschaltet wird.

8. Telekommunikationssystem nach Anspruch 7,
**dadurch gekennzeichnet,**
**daß** das Schalterelement den Kontakt (r) eines der Türsprechstelle örtlich zugeordneten Relais (R) darstellt, das seinerseits nach dem Ansprechen der Indikatoreinheit (IE) während der damit beginnenden Bedarfszeit über die Anschlußleitung gespeist wird.

9. Telekommunikationssystem nach Anspruch 6,
**dadurch gekennzeichnet,**
**daß** durch die Betätigung des manuell betätigbaren Kontaktelementes (TA) aufgrund der dabei eintretenden und der Systemsteuerung signalisierten Zustandsänderung diese unabhängig von der nachfolgend eingenommenen Schaltstellung des Kontaktelementes eine Rufsignalisierung zu mindestens einem durch eine entsprechende Abspeicherung vorab festgelegten Teilnehmerendgerät vornimmt und daß mit der Rufannahme die Verbindung zu der Türsprechstelle durchgeschaltet wird.

10. Telekommunikationssystem nach einem der vorhergehenden Ansprüche,
**dadurch gekennzeichnet,**
**daß** aufgrund einer an einem Endgerät (EG) erfolgten und durch die Systemsteuerung (CPU) ausgewerteten Informationseingabe ein Steuersignal an die zu der Türsprecheinrichtung (TSE) führenden Anschlußleitung (ASL) angelegt wird, daß dieses Steuersignal zur Freigabe des Türverriegelungsmechanismus (TM) herangezogen wird.

11. Telekommunikationssystem nach einem der vorhergehenden Ansprüche,
**dadurch gekennzeichnet,**
**daß** die Türsprecheinrichtung als Türfreisprecheinrichtung ausgebildet ist und daß die ihr funktionell zugehörigen Elemente entweder zu Teileinheiten (AE, VE, KE) zusammengefaßt sind oder eine eigenständige Einheit bilden.

12. Telekommunikationssystem nach Anspruch 1,
**dadurch gekennzeichnet,**
**daß** die Indikatoreinheit (IE) eine örtlich unmittelbar zugeordnete Teileinheit der Türsprecheinrichtung (TSE) darstellt.

## Claims

1. Telecommunication system with telephone terminals and a control system consisting of a system memory for the storage of program modules and data and of at least one system processor, with at least, in addition to the provided terminals, a door telephone device (TSE) connected thereto by a connection line as a special terminal, with said door telephone device having an amplifier circuit linked to a microphone and receiver or loudspeaker circuit that for its part is supplied from an external power supply source (SQ) independent of the system, with it being possible to switch a speech connection to the door telephone device by means of one of the connected telephone terminals (EG),
**characterised in that**
an indicator unit (IE), connected to this connection line (ASL) and responding to superposed a.c. voltage components and/or d.c. voltage changes, is provided that due to its effective response activates, indirectly or directly, the switching of the amplifier circuit to the power supply source (SQ) for a specific demand time.

2. Telecommunication system according to claim 1,
**characterised in that**
the indicator unit (IE) responds to superposed a.c. voltage components regardless of direction.

3. Telecommunication system according to claim 1,
**characterised in that**
a fixed predetermined time period is specified as the demand time.

4. Telecommunication system according to claim 1,
**characterised in that**
the demand time includes the time period of the occurring a.c. voltage components including an additional time period that serves to bridge pause signals.

5. Telecommunication system according to one of claims 3 or 4,
**characterised in that**
the response of the indicator circuit (IE) is activated by a contact element (TA) that is arranged at the gateway speech terminal and can be manually operated, with the wires of the connection line being bridged on a d.c. basis at the same time for a specific time period.

6. Telecommunication system according to claim 5,
**characterised in that**
the operation of the manually actuated contact element (TA) also serves at the same time to make a call request by the system controller (CPU), by means of a suitable indication, to at least one terminal (EG) specified in advance.

7. Telecommunication system according to one of claims 3 to 5,
**characterised in that**
exclusively during the respective demand time, a switch element (r) is actively switched when the indicator unit (IE) responds, which actively switches on the external power supply source (SQ) to supply power to the amplifier circuit and other elements of the door telephone device as necessary.

8. Telecommunication system according to claim 7,
**characterised in that**
the switch element is the contact (r) of a relay (R), assigned to the gateway speech terminal, that is itself supplied with power via the connection line during the demand time beginning when the indicator unit (IE) responds.

9. Telecommunication system according to claim 6,
**characterised in that**
due to the status change that occurs, caused by the operation of the manually actuated contact element (TA), and by a signal to the system controller, the system controller, regardless of the switch position of the contact element subsequently adopted, performs call signalling to at least one user terminal specified in advance by suitable storage and the connection is switched through to the gateway speech terminal when the call is accepted.

10. Telecommunication system according to one of the preceding claims,
**characterised in that**
due to information input at a terminal (EG) and evaluated by the system controller (CPU), a control signal is applied to the connection line (ASL) leading to the door telephone device (TSE), with this control signal being used to release the door locking mechanism (TM).

11. Telecommunication system according to one of the preceding claims,
**characterised in that**
the door telephone device is designed as a gateway speech device and that elements functionally forming part thereof are combined either into part units (AE, VE, KE) or formed as a single independent unit.

12. Telecommunication system according to claim 1,
**characterised in that**
the indicator unit (IE) is a local, directly associated part unit of the door telephone device (TSE).

## Revendications

1. Système de télécommunication avec des terminaux téléphoniques et une commande système, laquelle se compose d'une mémoire système pour stocker les modules de programme et les données et d'au moins un processeur système, avec au moins un interphone (TSE) qui y est raccordé via une ligne de raccordement en tant que terminal spécial en plus des terminaux téléphoniques, lequel interphone comporte un circuit amplificateur couplé à un circuit microphonique et un circuit écouteur resp. haut-parleur, lequel circuit amplificateur est alimenté, de son côté, par une source de tension d'alimentation (SQ) externe indépendante du système, une liaison vocale pouvant être commutée vers l'interphone au moyen de l'un des terminaux téléphoniques (EG) raccordés, **caractérisé en ce qu'**est prévue une unité indicatrice (IE) couplée à cette ligne de raccordement (ASL) et répondant à des fractions de tension alternative et/ou des modifications de tension continue superposées, et **en ce que** sa réponse efficace provoque, directement ou indirectement, la connexion du circuit amplificateur à la source de tension d'alimentation (SQ) pour un temps de besoin déterminé.

2. Système de télécommunication selon la revendication 1, **caractérisé en ce que** l'unité indicatrice (IE) répond à des fractions de tension alternative superposées indépendamment de la direction.

3. Système de télécommunication selon la revendication 1, **caractérisé en ce qu'**est déterminé, en tant que temps de besoin, un laps de temps fixement prédéterminé.

4. Système de télécommunication selon la revendication 1, **caractérisé en ce que** le temps de besoin inclut le laps de temps des fractions de tension alternative qui se présentent y compris un laps de temps supplémentaire servant à ponter des signes de pause.

5. Système de télécommunication selon l'une des revendications 3 ou 4, **caractérisé en ce que** la réponse du circuit indicateur (IE) est provoquée par l'actionnement d'un élément de contact (TA) situé sur l'interphone et actionnable manuellement, ce par quoi le pontage des fils de la ligne de raccordement par courant continu est opéré pour un temps déterminé.

6. Système de télécommunication selon la revendication 5, **caractérisé en ce que** l'actionnement de l'élément de contact actionnable manuellement (TA) sert en même temps à provoquer, via une indication adéquate, une requête d'appel, par le biais de la commande système (CPU), à au moins un terminal (EG) préalablement déterminé.

7. Système de télécommunication selon l'une des revendications 3 à 5, **caractérisé en ce qu'**est connecté efficacement, exclusivement pendant le temps de besoin respectif, à la réponse de l'unité indicatrice (IE), un élément de commutation (r) par lequel la source de tension d'alimentation externe (SQ) est connectée efficacement aux fins de l'alimentation en tension du circuit amplificateur et, le cas échéant, d'autres éléments de l'interphone.

8. Système de télécommunication selon la revendication 7, **caractérisé en ce que** l'élément de commutation constitue le contact (r) d'un relais (R) affecté localement à l'interphone, lequel relais, pour sa part, est alimenté via la ligne de raccordement suite à la réponse de l'unité indicatrice (IE) pendant le temps de besoin commençant à cet instant.

9. Système de télécommunication selon la revendication 6, **caractérisé en ce que**, par l'actionnement de l'élément de contact (TA) actionnable manuellement, en raison de la modification d'état se présentant dans ce cadre et signalée à la commande système, celle-ci opère, indépendamment de la position de commutation ensuite prise par l'élément de contact, une signalisation d'appel vers au moins un terminal d'usager déterminé préalablement par une mise en mémoire correspondante, et **en ce que**, avec la prise de l'appel, la liaison est commutée vers l'interphone.

10. Système de télécommunication selon l'une des revendications précédentes, **caractérisé en ce que**, en raison d'une saisie d'information faite sur un terminal (EG) et évaluée par la commande système (CPU), un signal de commande est appliqué à la ligne de raccordement (ASL) menant à l'interphone (TSE) et **en ce qu'**il est fait appel à ce signal de commande pour débloquer le mécanisme de verrouillage de porte TM.

11. Système de télécommunication selon l'une des revendications précédentes, **caractérisé en ce que** l'interphone se présente sous la forme d'un interphone main libre et **en ce que** les éléments qui lui sont fonctionnellement associés soit son regroupés en sous-unités (AE, VE, KE) soit constituent une unité autonome.

12. Système de télécommunication selon la revendication 1, **caractérisé en ce que** l'unité indicatrice (IE) constitue une sous-unité de l'interphone (TSE) directement affectée localement.
